# EUROPÄISCHE PATENTSCHRIFT

(11) **EP 1 303 028 B1**
(45) Veröffentlichungstag und Bekanntmachung des Hinweises auf die Patenterteilung: **13.12.2006**
(21) Anmeldenummer: 01124602.2
(22) Anmeldetag: 15.10.2001
(51) Int. Cl.: H02K 9/00, C25B 1/10

(54) **System zur Versorgung eines Generators mit Wasserstoff**
System for supplying a generator with hydrogen
Système pour alimenter un générateur en hydrogène

(43) Veröffentlichungstag der Anmeldung: 16.04.2003
(73) Patentinhaber: SIEMENS AKTIENGESELLSCHAFT, 80333 München (DE)
(72) Erfinder: Puthawala, Anwer, 91054 Buckenhof (DE); Schönfeld, Peter, 45259 Essen (DE)

(56) Entgegenhaltungen:
- WO-A-01/47053
- DE-A- 3 105 168
- US-A- 6 076 568

## Beschreibung

Die Erfindung betrifft ein System zur Versorgung eines Generators mit Wasserstoff, insbesondere eines Generators einer Kraftwerksanlage.

Generatoren und zwar insbesondere solche großer Kraftwerksanlagen, beispielsweise mit einer Leistung von über 50MW, werden zum Schutz vor durch Überhitzung bedingten Schäden während des Betriebs gekühlt. Als Kühlmittel eignet sich hierfür vorzugsweise Wasserstoff, der gegenüber Luft 18-fach höheres Wärmeabfuhrvermögen aufweist. Um die Wirkung der Kühlung noch weiter zu steigern, wird der Wasserstoff im Generator auf Überdruck gebracht und je nach zu kühlendem Generatortyp mit einem Druck von z.B. 2,0 bar bis 5,25 bar verwendet.

Durch ständige Leckagen verliert der Generator stetig Wasserstoff. Um einen einwandfreien Betrieb des Generators gewährleisten zu können, muss diese Leckagemenge je nach Bedarf ausgeglichen werden, weswegen dem Generator von Zeit zu Zeit entsprechende Mengen an Wasserstoff zuzuführen sind. In diesem Zusammenhang ist es aus dem Stand der Technik bekannt, Wasserstoff in Gasflaschen oder Lagerbehältern bereitzustellen und dem Generator je nach Bedarf über entsprechende Rohrleitungen zuzuführen. Falls standortbedingt eine Gaslieferung in Flaschen oder mittels Tankwagen nicht möglich sein sollte, ist es ferner aus dem Stand der Technik bekannt, den Wasserstoff mittels Kalilauge-Elektrolyseure vor Ort zu erzeugen, in entsprechenden Behältern zu lagern und dem Generator über ein Rohrleitungssystem zuzuführen.

Von Nachteil bei der vorbeschriebenen Art der Wasserstofflagerung, Verteilung und Generatorzufuhr ist der Umstand, dass es bei einem Integritätsverlust oder bei Leckagen zur Bildung von zündfähigen Gasgemischen kommen kann, so dass ein Brand und sogar eine Explosion nicht auszuschließen sind. Ferner besteht insbesondere bei einer unsachgemäßen oder ungewollt nachlässigen Handhabung der Wasserstoff-Lagerbehälter ein hohes Unfallrisiko, was insbesondere bei einem Wechsel der Lagerbehälter zum Tragen kommt.

Die mit der Bildung zündfähiger Gasgemische einhergehenden Nachteile und Risiken werden bislang durch die Verflüchtigung infolge einer natürlichen Belüftung, d.h. durch Luftdurchzug, versucht so gering wie möglich zu halten. Ein Restrisiko bleibt jedoch in jedem Fall bestehen. Hinzu kommt, dass der hinsichtlich eines Wechsels entleerter Wasserstoffvorratsbehälter bestehenden Unfallgefahr lediglich durch entsprechende Arbeitsvorschriften begegnet wird, was natürlich in höchstem Maß unzufriedenstellend ist, denn wird durch solche Maßnahmen nicht die Unfallgefahr an sich gemindert, sondern lediglich einer unsachgemäßen Handhabung vorgebeugt. Häufig sind jedoch derlei handhabungsvorschreibende Maßnahmen umständlich und zeitaufwendig in der Durchsetzung, so dass es in der Praxis nicht selten vorkommt, dass sie vom Bedienpersonal für eine einfachere und schnellere Handhabung bewusst umgangen werden. Sie sind daher nicht wirklich geeignet, die Unfallgefahr nachhaltig zu verringern.

In dem Dokument DE 31 05 168 wird eine Anordnung zur Versorgung eines Generators mit Wasserstoff als Kühlmittel beschrieben. In einem geschlossenen Kreislauf wird ein Gerät zur elektrolytischen Erzeugung von Wasserstoff angeschlossen, wobei das Gerät zur Verringerung des Risikos einer Knallgasexplosion in der Nähe des Einsatzortes des Wasserstoffs sich befindet. Als Elektrolyt wird hierbei Lithiumhydroxid verwendet.

Im Dokument WO 01/47053 A1 wird eine elektrochemische Zelle zur Erzeugung von elektrischer Energie beschrieben. In diesem Dokument wird eine bekannte elektrochemische Zelle bzw. Brennstoffzelle weitergebildet, um den Wirkungsgrad einer solchen zu verbessern.

Zur Erzielung einer hohen Prozesssicherheit unter Vermeidung von Fehlbedienungen wird in dem Dokument US 6,076,568 vorgeschlagen, dass Befüllen und Entleeren eines gasgekühlten Generators über eine zentrale Prozesssteuereinheit vorzunehmen, welche in automatisierter und vorprogrammierter Abfolge die für den jeweiligen Spülvorgang relevanten Ventileinrichtungen betätigt und die für eine sichere Steuerung notwendigen Messungen in den jeweiligen Messbereichen durchführt und auswertet.

Es ist daher Aufgabe der vorliegenden Erfindung, ein System zur Versorgung eines Generators mit Wasserstoff vorzuschlagen, dass bei gleichzeitig einfacher Handhabung ein hohes Maß an Sicherheit bietet.

Zur Lösung dieser Aufgabe wird mit der Erfindung vorgeschlagen ein System zur Versorgung eines Generators mit Wasserstoff, insbesondere eines Generators einer Kraftwerksanlage, mit einem geschlossenen Systemkreislauf zum Führen von Wasser und/oder Gas und einer vom Systemkreislauf abzweigenden Wasserstoffzuführungsleitung für den Generator, wobei der Systemkreislauf eine als Membranelektrolyseur ausgebildete Elektrolyteinheit aufweist, wobei das System durch eine Steuereinrichtung gekennzeichnet ist, die in Abhängigkeit der von der Elektrolyseeinheit bereitgestellten Menge an Wasserstoff die Stromversorgung der Elektrolyseeinheit steuert, wobei eine Meßeinrichtung vorgesehen ist, die die dem Generator zugeführte Menge an Wasserstoff mißt und ein sprechendes Signal abgibt und wobei eine Vergleichsschaltung vorgesehen ist, die Meßsignal mit einem vorgebbaren Sollsignal vergleicht und bei Ungleichheit die Stromversorgung der Elektrolyseeinheit entsprechend erhöht oder absenkt.

Mit dem erfindungsgemäßen System wird ein Generator-Wasserstoffversorgungssystem bereitgestellt, das einen in sich geschlossenen Systemkreislauf aufweist und nur so viel Wasserstoff produziert, wie in den Generator zur Kühlung eingespeist werden soll. Mit dem erfindungsgemäßen System ist in vorteilhafterweise sichergestellt, dass bei Integritätsverlusten oder Leckagen die Bildung von zündfähigen Gasgemischen wirkungsvoll unterbunden wird, da der im System vorrätige Wasserstoff auf das Wasserstoffinventar in den Rohrleitungen beschränkt ist. Diese Menge an Wasserstoff reicht jedoch nicht aus, um im Falle eines Lecks zündfähige Gasgemische ausbilden zu können.

Der im Systemkreislauf integrierten Elektrolyseneinheit, die als Membranelektrolyseur ausgebildet ist, wird Wasser, vorzugsweise Deionat oder entsprechend aufbereitetes Trinkwasser, zugeführt, welches dann infolge eines Elektrolysevorgangs in Wasserstoff und Sauerstoff zersetzt wird. Der so produzierte Wasserstoff wird zur Kühlung des Generators verwendet, wohingegen der Sauerstoff als Abfallprodukt an die Atmosphäre abgegeben und als anderweitigen Zwecken verwendet werden kann. Durch eine entsprechende Steuerung der Stromzufuhr für die Elektrolyseeinheit kann diese in Abhängigkeit der vom Generator benötigten Menge an Wasserstoff betrieben werden. Die Elektrolyseeinheit produziert als bedarfsgerecht nur so viel Wasserstoff, wie er vom Generator auch tatsächlich benötigt wird. Eine Überproduktion von Wasserstoff kann somit in vorteilhafterweise unterbunden werden. Auch ist es mit dem erfindungsgemäßen System nicht weiter notwendig, Wasserstoffreserven mittels entsprechender Lagerbehälter zur Verfügung zu stellen. Ein etwaiger Wechsel entleerter Wasserstoffvorratsbehälter entfällt somit gleichfalls.

Entscheidend ist mithin, die dem Generator tatsächlich zugeführte Menge an Wasserstoff mit derjenigen Menge an Wasserstoff zu vergleichen, die dem Generator zum Erhalt einer bestimmten Betriebstemperatur zuzuführen wäre. Ergibt sich hierbei infolge eines Vergleichs der gemessenen Istmenge an Wasserstoff mit der vorgebbaren Sollmenge an Wasserstoff ein Unterschied, so ist die Produktion an Wasserstoff in der Elektrolyseeinheit entsprechend zu ändern. Für den Fall, dass die Istmenge hinter der Sollmenge zurückbleibt, ist die Wasserstoffproduktion entsprechend anzuheben, im umgekehrten Fall, wenn also die Istmenge an Wasserstoff die vorgegebene Sollmenge überschreitet, ist die Produktion an Wasserstoff durch die Elektrolyseeinheit entsprechend zurückzufahren. Dies wird über die Stromzufuhr für die Elektrolyseeinheit gesteuert, wobei mit einer Erhöhung der Stromzufuhr eine Erhöhung der Wasserstoffproduktion einhergeht und umgekehrt, mit einer Absenkung der Stromzufuhr eine Verringerung der Wasserstoffproduktion erreicht wird.

Gegenüber einem herkömmlichen Kalilauge-Elektrolyseur weist die erfindungsgemäß als Membranelektrolyseur ausgebildete Elektrolyteinheit den Vorteil auf, keinerlei Abfälle zu produzieren. So ist es, anders als bei einem Kalilauge-Elektrolyseur, nicht notwendig, in regelmäßigen Abständen die Kalilauge zu erneuern. Auch ist der Einsatz eigener Gasreinigungsanlagen nicht weiter erforderlich, da im erfindungsgemäßen System keinerlei Chemikalien zum Einsatz kommen.

Das erfindungsgemäße System bietet zudem den Vorteil, sehr kompakt ausgebildet werden zu können, so dass eine Installation des Systems in der näheren Umgebung des Generators möglich ist, wodurch die wasserstoffführenden Rohrleitungen möglichst kurz gehalten werden können. Auf diese Weise wird das maximal in den wasserstoffführenden Rohrleitungen zur Verfügung stehende Wasserstoffinventar auf ein Minimum reduziert. Hinzu kommt, dass die Rohrleitungsverbindungen der wasserstoffführenden Rohre des erfindungsgemäßen Systems nicht gelöst werden müssen, wie dies beispielsweise für den wechselnden Anschluss von Wasserstoffvorratsbehältern der Fall wäre. Die Unfallgefahr wird somit auf das denkbar kleinste Maß reduziert.

Das erfindungsgemäße Generator-Wasserstoffversorgungssystem bietet in vorteilhafterweise ein hohes Maß an Sicherheit, da mit der im Systemkreislauf integrierten Elektrolyseeinheit nur die Menge an Wasserstoff produziert wird, die vom Generator benötigt wird. Die eine potentielle Unfallgefahr darstellende Überproduktion und Zwischenlagerung von Wasserstoff kann somit in vorteilhafterweise vermieden werden. Auch ist es mit dem erfindungsgemäßen System nicht weiter erforderlich, extern produzierten Wasserstoff mittels regelmäßig auszutauschender Wasserstoffvorratsbehälter in das System einzuführen. Hiermit wird nicht nur die Unfallgefahr verhindert, auch ermöglicht dies eine deutlich vereinfachte Handhabung, was sich nicht zuletzt in der Möglichkeit eines reduzierten Personalaufwandes ausdrückt. Zudem ist das erfindungsgemäße System wenig wartungsaufwendig und so ist die Elektrolyseeinheit nur im Rahmen regelmäßig stattfindender Gesamtwartungsvorgänge zu überprüfen.

Gemäß einer vorteilhaften Weiterbildung der Erfindung weist die Elektrolyseeinheit eine Mehrzahl von elektrisch in Reihe geschalteten Membranelektrolysezellen auf. Diese Art der Ausgestaltung der Elektrolyseeinheit bietet insbesondere Vorteile hinsichtlich der Baugröße, da die Ausgestaltung von Membranelektrolysezellen eine kompakte Bauart ermöglicht. Insbesondere gegenüber einem herkömmlichen Kalilauge-Elektrolyseur, für den in der Regel ein eigenes Gebäude mit Abmessungen von z. B. 20 m x 10 m x 4 m notwendig ist, bietet die erfindungsgemäß verwendete Elektrolyseeinheit eine derart kompakte Bauform, beispielsweise von 1,2 m x 1,2 m x 2 m, dass sie in direkter Nähe des Generators aufgebaut werden kann. Hierdurch können die wasserstoffführenden Rohrleitungen, die von der Elektrolyseeinheit zum Generator führen, auf ein Längenminimum beschränkt werden, was sich hinsichtlich sicherheitsrelevanter Aspekte insofern vorteilhaft auswirkt, als dass die im System anstehende Wasserstoffmenge minimal ist.

Gemäß einer vorteilhaften Weiterbildung der Erfindung ist vorgesehen, dass jedem Membranelektrolysezelle beidseitig mit jeweils einer als Elektrode dienenden Kontaktschicht versehen ist, wobei die als Kathode vorgesehene Kontaktschicht aus vorzugsweise Platin und die als Anode vorgesehene Kontaktschicht aus vorzugsweise Iridium gebildet ist. Diese Ausbildung der Membranelektrolysezelle ermöglicht nicht nur einen hohen Umsetzungsgrad, auch wird hierdurch eine langfristige Beständigkeit der Elektrolyseeinheit sichergestellt, was in vorteilhafterweise einen verringerten Wartungsaufwand zur Folge hat. Außerdem ist ein besonders geringer Wartungs- und Reparaturaufwand dadurch gewährleistet, dass dem System und damit der Elektrolyseeinheit ausschließlich ein vorbehandeltes, d.h. in Form eines Deionats gereinigtes Wasser zugeführt wird.

Gemäß einer vorteilhaften Weiterbidlung der Erfindung sind die als Kathode vorgesehenen Kontaktschichten und die als Anode vorgesehenen Kontaktschichten jeweils eingangs- und ausgangsseitig an eine gemeinsame Zuführungsleitung und an eine gemeinsame Abführungsleitung angeschlossen. Die wasserführende Rohrleitung verzweigt in Strömungsrichtung vor der Elektrolyseeinheit in eine Zuführungsleitung für die Kathode und in eine Zuführungsleitung für die Anode. In beiden Rohrleitungen befinden sich in vorteilhafterweise Durchflußmeßstellen sowie Einstellventile. In Strömungsrichtung hinter der Elektrolyseeinheit befinden sich kathoden- wie auch anodenseitig entsprechende Abführungsleitungen. Um zu verhindern, dass bei einer Fehlschaltung Wasserstoff rückwärts in die Anodenseite des Elektrolyseurs strömt, befindet sich gemäß einem weiteren Vorschlag der Erfindung in der kathodenseitigen Rohrleitung ein entsprechendes Rückschlagventil.

Gemäß einer vorteilhaften Weiterbildung der Erfindung ist die ausgangsseitige Abführungsleitung der als Kathode vorgesehenen Kontaktschichten an einen Wasser-Wasserstoff-Abscheider und die ausgangsseitige Abführungsleitung der als Anode vorgesehenen Kontaktschichten an einem Wasser-Sauerstoff-Abscheider angeschlossen. Der im Wasser-Wasserstoff-Abscheider abgeschiedene Wasserstoff wird dem Generator über ein vorzugsweise Druckregelventil druckabhängig zugeführt. Dies kann über eine etwaig am Generator vorhandene Gastrockenanlage erfolgen. Der im Wasser-Sauerstoff-Abscheider getrennte Sauerstoff wird im System nicht weiter benötigt und kann über ein zwischengeschaltetes Druckregelventil an die Umgebungsluft abgegeben werden. Alternativ kann der von der Elektrolyseeinheit erzeugte Sauerstoff auch einem Abgassystem zugeführt werden, das den Sauerstoff für eine etwaig andere Verwendung aufbereitet oder speichert.

Gemäß einer vorteilhaften Weiterbildung der Erfindung ist vorgesehen, dass der Wasser-Wasserstoff-Abscheider und der Wasser-Sauerstoff-Abscheider über einen statischen Mischer an einen gemeinsamen Katalysator angeschlossen sind. Durch diese Anordnung wird erreicht, dass das in den beiden Gasabscheidern abgeschiedene Wasser gesammelt und über einen statischen Mischer einem Katalysator zugeführt wird, in welchem die im Wasser befindlichen Restgase zu Wasser rekombiniert werden. Das Gasfreiwasser kann dem Elektrolyseur sodann über eine Umwälzpumpe wieder zugeführt werden. Ein geschlossener Systemkreislauf wird somit in vorteilhafterweise realisiert.

Gemäß einer vorteilhaften Weiterbildung der Erfindung ist dem Katalysator in Strömungsrichtung ein Wärmetauscher nachgeschaltet wird. Hierbei ist vorzugsweise im Abschnitt zwischen Katalysator und Wärmetauschern eine Zuführungsleitung für die Zufuhr von Wasser vorgesehen. Da ständig eine kleinere Menge an Wasser im Elektrolyseur verbraucht wird, ist es erforderlich, dem Systemkreislauf Wasser, vorzugsweise Deionat zuzuführen. Um temperaturbedingte Druckschwankungen zu unterbinden ist in vorteilhafterweise ein Wärmetauscher vorgesehen, der sowohl dem Katalysator als auch der Anschlussstelle der Zuführungsleitung für die Zufuhr von Wasser in Strömungsrichtung betrachtet nachgeschaltet ist. Für den Fall, dass Deionat nicht vorhanden ist, ist Trinkwasser zu Deionat aufzubereiten und druckabhängig zuzuführen. Zur Vermeidung von Druckschwankungen kann zudem ein Ausgleichsbehälter vorgesehen sein, der dem Wärmetauscher in Strömungsrichtung vorinstalliert ist.

Wie oben bereits ausgeführt, besteht ein wesentlicher Vorteil des erfindungsgemäßen Systems darin, dass die Elektrolyseeinheit Wasserstoff nicht auf Vorrat produziert, sondern stattdessen Wasserstoff nur in einer solchen Menge bereitstellt, wie er für eine entsprechende Kühlung des Generators diesem zugeführt werden soll. Erreicht wird dies durch eine entsprechende Stromversorgungssteuerung der Elektrolyseeinheit. Hierbei gilt, je höher die zugeführte Menge an Strom, desto größer die produzierte Menge an Wasserstoff. Entsprechend gilt, dass sich die Menge an produziertem Wasserstoff verringert, sobald die Stromzufuhr an die Elektrolyseeinheit reduziert wird.

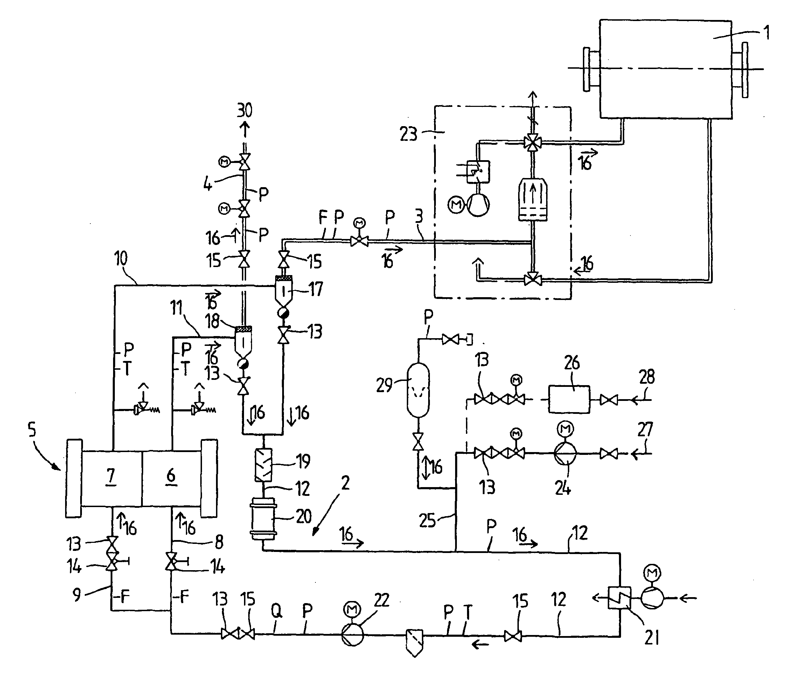

Weitere Vorteile und Merkmale der Erfindung ergeben sich aus der Beschreibung anhand der Figur. Diese zeigt in schematischer Darstellung einen Übersichtsplan des erfindungsgemäßen Systems.

Zur Versorgung eines Generators 1 mit als Kühlmedium dienendem Wasserstoff ist der erfindungsgemäße Systemkreislauf 2 vorgesehen. Der Systemkreislauf 2 weist eine als Membranelektrolyseur ausgebildete Elektrolyteinheit 5 auf, wobei entsprechend ausgebildete Membranelektrolysezellen die Anode 6 bzw. die Kathode 7 bilden. Weitere Bestandteile des Systemkreislaufs 2 sind ein Wasser-Wasserstoff-Abscheider 17, ein Wasser-Sauerstoff-Abscheider 18, ein statischer Mischer 19 sowie ein dem Mischer 19 in Strömungsrichtung 16 nachgeschalteter Katalysator 20. Ferner sind ein Wärmeaustauscher 21 und eine Umwälzpumpe 22 vorgesehen. Sämtliche Bestandteile des erfindungsgemäßen Systems sind über Rohrleitungen 12 zu einem geschlossenen Kreislauf miteinander verbunden. Für eine ständige Überwachung des im Systemkreislauf 2 geführten Wassers und/oder Gases werden an unterschiedlichen Stellen des Systemkreislaufes 2 Druckmessungen P, Temperaturmessungen T, Durchflußmessungen F und Leitfähigkeitsmessungen Q durchgeführt, wozu entsprechende Sensoren im Systemkreislauf 2 installiert sind. Ferner verfügt der Systemkreislauf über durchflußregelnde Ventile, die Rückschlagventile 13, Einstellventile 14 sowie Durchflußventile 15.

Zur Versorgung des Generators 1 mit Wasserstoff wird der Elektrolyseeinheit 5 Wasser, vorzugsweise Deionat, in Strömungsrichtung 16 zugeführt. Zuführungsseitig sind hierfür zwei unterschiedliche Zuführungsleitungen 8 und 9 vorgesehen, die sich durch eine Verzweigung der Rohrleitung 12 ergeben. Die Zuführungsleitung 8 ist hierbei an die Anode 6 und die Zuführungsleitung 9 an die Kathode 7 angeschlossen. Durch die Beaufschlagung der Elektrolyseeinheit mit Strom, beispielsweise durch einen in der Figur nicht dargestellten Stromgenerator, wird das in die Elektrolyseeinheit 5 eingefüllte Wasser elektrolytisch zersetzt und es kommt zur Bildung von Wasserstoff und Sauerstoff. Wasserstoff bildet sich an der Kathode 7 aus und wird über die Kathodenabführungsleitung 10 dem Wasser-Wasserstoff-Abscheider 17 zugeführt. Entsprechend bildet sich an der Anode 6 Sauerstoff aus, der über die Anodenabführungsleitung 11 dem Wasser-Sauerstoff-Abscheider 18 zugeführt wird. An den Wasser-Sauerstoff-Abscheider 18 ist die Sauerstoffabführungsleitung 4 angeschlossen, über die der Sauerstoff einem Abgassystem zugeführt wird. Entweder kann der Sauerstoff an die umgebende Atmosphäre abgegeben oder für eine etwaige Weiterbenutzung entsprechend aufbereitet oder gespeichert werden. An den Wasser-Wasserstoff-Abscheider 17 ist die Wasserstoffzuführungsleitung 3 angeschlossen, die dem Generator 1 den benötigten Wasserstoff zuführt. Vorzugsweise ist in Strömungsrichtung 16 zwischen dem Wasser-Wasserstoff-Abscheider 17 und dem Generator 1 ein Gastrockner 23 vorgesehen. Gastrockner an sich sind aus dem Stand der Technik bekannt und brauchen daher hinsichtlich ihrer technischen Ausgestaltung an dieser Stelle nicht weiter erörtert zu werden.

Das in den beiden Gasabscheidern 17 und 18 abgeschiedene Wasser wird über einen statischen Mischer 19 einem Katalysator 20 zugeführt. Die im Wasser befindlichen Restegas werden im Katalysator 20 zu Wasser rekombiniert. Das gasfreie Wasser wird sodann über einen Wärmetauscher 21 und über eine Umwälzpumpe 22 an die Elektrolyseeinheit 5 zurückgeführt.

Da ständig eine kleinere Menge an Wasser in der Elektrolyseeinheit 5 verbraucht wird, ist dem Systemkreislauf 2 eine entsprechende Menge an Wasser zuzuführen. Dies geschieht über die Zuführungsleitung 25, die an den Systemkreislauf 2 im Abschnitt zwischen Katalysator 20 und Wärmetauscher 21 angeschlossen ist. Vorzugsweise wird dem Systemkreislauf 2 über eine Druckerhöhungspumpe 24 Deionat 27 zugeführt. Für den Fall, dass Deionat nicht vorhanden sein sollte, kann alternativ hierzu auch Trinkwasser 28 zugeführt werden, das über eine entsprechende Wasseraufbereitung 26 zu Deionat aufbereitet und dem Systemkreislauf 2 über die Zuführungsleitung 25 zugeführt wird. Zur Vermeidung von Druckschwankungen ist zudem ein Ausgleichsbehälter 29 vorgesehen, der gleichfalls an die Zuführungsleitung 25 angeschlossen ist. Alternative Anschlußmöglichkeiten sind selbstverständlich.

Mit dem erfindungsgemäßen System wird in vorteilhafterweise ein geschlossener Systemkreislauf 2 vorgeschlagen, wobei die in den Systemkreislauf 2 integrierte Elektrolyseeinheit 5 bedarfsgerecht Wasserstoff produziert. Dieser wird zunächst über die Kathodenabführungsleitung 10 und den Wasser-Wasserstoff-Abscheider 17 über die Wasserstoffzuführungsleitung 3 dem Generator 1 zugeführt. Hierbei kann die erzeugte Menge an Wasserstoff mittels einer einfachen Stromregelung schnell und exakt an den Wasserstoffbedarf des Generators angepasst werden. Zudem ergibt sich in vorteilhafterweise durch die Rekombination der im Wasser befindlichen Restgase durch den Katalysator 20 eine hohe Reinheit des Wasserstoffes von bis zu 99,9%.

## Patentansprüche

1. System zur Versorgung eines Generators (1) mit Wasserstoff, insbesondere eines Generators (1) einer Kraftwerksanlage, mit einem geschlossenen Systemkreislauf (2) zum Führen von Wasser und/oder Gas und einer vom Systemkreislauf (2) abzweigenden Wasserstoffzuführungsleitung (3) für den Generator (1), wobei der Systemkreislauf (2) eine als Membranelektrolyseur ausgebildete Elektrolyseeinheit (5) aufweist, wobei eine Steuereinrichtung vorgesehen ist, die in Abhängigkeit der von der Elektrolyseeinheit (5) bereitzustellenden Menge an Wasserstoff die Stromversorgung der Elektrolyseeinheit (5) steuert, wobei eine Meßeinrichtung vorgesehen ist, die die dem Generator (1) zugeführten Menge an Wasserstoff mißt und ein entsprechendes Signal abgibt und wobei eine Vergleichsschaltung vorgesehen ist, die das Meßsignal mit einem vorgebbaren Sollsignal vergleicht und bei Ungleichheit die Stromversorgung der Elektrolyseeinheit (5) entsprechend erhöht oder absenkt.

2. System nach Anspruch 1, **dadurch gekennzeichnet, dass** die Elektrolyseeinheit (5) eine Mehrzahl von elektrisch in Reihe geschalteten Membranelektrolysezellen aufweist.

3. System nach Anspruch 2, **dadurch gekennzeichnet, dass** jedem Membranelektrolysezelle beidseitig mit jeweils einer als Elektrode dienenden Kontaktschicht versehen ist, wobei die als Kathode (7) vorgesehene Kontaktschicht aus vorzugsweise Platin und die als Anode (6) vorgesehene Kontaktschicht aus vorzugsweise Iridium gebildet ist.

4. System nach einem der vorhergehenden Ansprüche, **dadurch gekennzeichnet , dass** die als Kathode (7) vorgesehenen Kontaktschichten und die als Anode (6) vorgesehenen Kontaktschichten jeweils eingangs- und ausgangsseitig an eine gemeinsame Zuführungsleitung (8, 9) und an eine gemeinsame Abführungsleitung (10, 11) angeschlossen sind.

5. System nach Anspruch 4, **dadurch gekennzeichnet, dass** die eingangsseitige Zuführungsleitung (9) für die Kathode (7) ein Rückschlagventil (13) aufweist.

6. System nach einem der vorhergehenden Ansprüche, **dadurch gekennzeichnet , dass** die ausgangsseitige Abführungsleitung (10) der Kathode (7) an einen Wasser-Wassserstoff-Abscheider (17) und die ausgangsseitige Abführungsleitung (11)der Anode (6) an einen Wasser-Sauerstoff-Abscheider (18) angeschlossen ist.

7. System nach einem der vorhergehenden Ansprüche, **dadurch gekennzeichnet , dass** der von der Elektrolyseeinheit (5) erzeugte Sauerstoff einem Abgassystem (30) zuführbar ist.

8. System nach einem der vorhergehenden Ansprüche, **dadurch gekennzeichnet , dass** der Wasser-Wasserstoff-Abscheider (17) und der Wasser-Sauerstoff-Abscheider (18) über einen statischen Mischer (19) an einen gemeinsamen Katalysator (20) angeschlossen sind.

9. System nach einem der vorhergehenden Ansprüche,
**dadurch gekennzeichnet , dass** der Systemkreislauf (2) einen Wärmetauscher (21) aufweist, der dem Katalysator (20) in Strömungsrichtung (16) nachgeschaltet ist.

10. System nach einem der vorhergehenden Ansprüche,
**dadurch gekennzeichnet , dass** der Systemkreislauf (2) vorzugsweise im Abschnitt zwischen Katalysator (20) und Wärmetauscher (21) eine Zuführungsleitung (25) für die Zufuhr von Wasser aufweist.

## Claims

1. System for supplying a generator (1) with hydrogen, in particular a generator (1) of a power generating plant, with a closed system cycle (2) for carrying water and/or gas and a hydrogen feed line (3), branching off from the system cycle (2), for the generator (1) , the system cycle (2) having an electrolysis unit (5) designed as a membrane electrolyzer, with a control device being provided, which controls the amount of current supplied to the electrolysis unit (5) on the basis of the amount of hydrogen to be prepared by the electrolysis unit (5), with a measuring device being provided, measuring the amount of hydrogen fed to the generator (1) and emitting a corresponding signal, and with a comparison circuit being provided, comparing the measuring signal with a predeterminable setpoint signal and, if they do not match, correspondingly raising or lowering the supply of current to the electrolysis unit (5).

2. System according to Claim 1, **characterized in that** the electrolysis unit (5) has a plurality of membrane electrolysis cells connected electrically in series.

3. System according to Claim 2, **characterized in that** each membrane electrolysis cell is provided on either side with a contact layer serving as an electrode, the contact layer intended as the cathode (7) preferably being formed from platinum and the contact layer intended as the anode (6) preferably being formed from iridium.

4. System according to one of the preceding claims, **characterized in that** the contact layers intended as the cathode (7) and the contact layers intended as the anode (6) are respectively connected on the input side and output side to a common feed line (8, 9) and to a common discharge line (10, 11).

5. System according to Claim 4, **characterized in that** the feed line (9) on the input side for the cathode (7) has a non-return valve (13).

6. System according to one of the preceding claims, **characterized in that** the discharge line (10) on the output side of the cathode (7) is connected to a water-hydrogen separator (17) and the discharge line (11) on the output side of the anode (6) is connected to a water-oxygen separator (18).

7. System according to one of the preceding claims, **characterized in that** the oxygen generated by the electrolysis unit (5) can be fed to an exhaust gas system (30).

8. System according to one of the preceding claims, **characterized in that** the water-hydrogen separator (17) and the water-oxygen separator (18) are connected via a static mixer (19) to a common catalyzer (20).

9. System according to one of the preceding claims, **characterized in that** the system cycle (2) has a heat exchanger (21), which is arranged downstream of the catalyzer (20) in the direction of flow (16).

10. System according to one of the preceding claims, **characterized in that** the system cycle (2) preferably has a feed line (25) for the feeding of water in the section between the catalyzer (20) and the heat exchanger (21).

## Revendications

1. Système d'alimentation d'une génératrice (1) en hydrogène, notamment d'une génératrice (1) d'une centrale électrique, comprenant un circuit (2) fermé de système pour le passage d'eau et/ou de gaz et un conduit (3) d'apport d'hydrogène en dérivation du circuit (2) du système pour la génératrice (1), le circuit (2) du système ayant une unité (5) d'électrolyse constituée sous la forme d'un électrolyseur à membrane, dans lequel il est prévu une unité de commande qui règle l'alimentation en courant électrique de l'unité (5) d'électrolyse en fonction de la quantité d'hydrogène mise à disposition par l'unité (5) d'électrolyse, dans lequel il est prévu un dispositif de mesure qui mesure la quantité d'hydrogène apportée à la génératrice (1) et qui émet un signal correspondant et dans lequel il est prévu un circuit de comparaison qui compare le signal de mesure à un signal de consigne pouvant être prescrit et en cas d'inégalité augmente ou diminue en conséquence l'alimentation en courant électrique de l'unité (5) d'électrolyse.

2. Système suivant la revendication 1, **caractérisé en ce que** l'unité (5) d'électrolyse a une multiplicité de cellules d'électrolyse à membrane montées électriquement en série.

3. Système suivant la revendication 2, **caractérisé en ce que** chaque cellule d'électrolyse à membrane est munie des deux côtés de, respectivement, une couche de contact servant d'électrode, la couche de contact prévue comme cathode (7) étant de préférence en platine et la couche de contact prévue comme anode (6) étant de préférence en iridium.

4. Système suivant l'une des revendications précédentes, **caractérisé en ce que** les couches de contact prévues comme cathodes (7) et les couches de contact prévues comme anodes (6) sont reliées du côté entrée et du côté sortie à un conduit (8, 9) d'entrée commun et à un conduit (10,11) de sortie commun.

5. Système suivant la revendication 4, **caractérisé en ce que** le conduit (9) d'entrée du côté entrée pour la cathode (7) a un clapet (13) antiretour.

6. Système suivant l'une des revendications précédentes, **caractérisé en ce que** le conduit (10) de sortie côté sortie de la cathode (7) communique avec un séparateur (17) eau-hydrogène et le conduit (11) de sortie du côté sortie de l'anode (6) communique à un séparateur (18) eau-oxygène.

7. Système suivant l'une des revendications précédentes, **caractérisé en ce que** l'oxygène produit par l'unité (5) d'électrolyse peut être envoyé à un système (30) de gaz perdu.

8. Système suivant l'une des revendications précédentes, **caractérisé en ce que** le séparateur (17) eau-hydrogène et le séparateur (18) eau-oxygène communiquent par un mélangeur (19) statique avec un pot catalytique (20) commun.

9. Système suivant l'une des revendications précédentes, **caractérisé en ce que** le circuit (2) du système a un échangeur de chaleur (21) qui est monté en aval dans le sens (16) du courant du pot (20) catalytique.

10. Système suivant l'une des revendications précédentes, **caractérisé en ce que** le circuit (2) du système a de préférence dans la partie comprise entre le pot (20) catalytique et l'échangeur (21) de chaleur un conduit (25) d'apport d'eau.
